# EUROPEAN PATENT APPLICATION

(11) **EP 2 030 685 A1**
(43) Date of publication of application: **04.03.2009**
(21) Application number: 07115188.0
(22) Date of filing: 29.08.2007
(51) Int. Cl.: B01L 3/00, G01P 5/10, G01P 5/18, G01F 1/684, G01F 1/696, G01F 1/708

(54) **A micro-fluidic device based upon active matrix principles**

(71) Applicant: Koninklijke Philips Electronics N.V., 5621 BA Eindhoven (NL)
(72) Inventor: The designation of the inventor has not yet been filed
(74) Representative: Tol, Arie Jan Willem

(57) **Abstract**

A micro-fluidic device (1) including a two-dimensional array of a plurality of components (2) for processing a fluid and/or for sensing properties of the fluid is suggested. Each component (2) is coupled to at least one control terminal (9,10) enabling an active matrix to change the state of each component individually. The components comprise at least one heater element (13). The active matrix includes a two-dimensional array of electronic components (12) realized in thin film technology. The active matrix provides a high versatility of the device. The thin film technology ensures a very cost efficient manufacturing also of large devices. In the micro-fluidic device the fluid flow can be detected.

## Description

### FIELD OF THE INVENTION

The present invention is related to a micro-fluidic device including a two-dimensional array of a plurality of components for processing a fluid and/or for sensing properties of the fluid, in which micro-fluidic device the fluid flow can be detected.

### BACKGROUND OF THE INVENTION

Micro-fluidic devices are at the heart of most biochip technologies, being used for both the preparation of fluidic samples and their subsequent analysis. The samples may e.g. be blood based. As will be appreciated by those in the art, the sample solution may comprise any number of things, including, but not limited to, bodily fluids like blood, urine, serum, lymph, saliva, anal and vaginal secretions, perspiration and semen of virtually any organism: Mammalian samples are preferred and human samples are particularly preferred; environmental samples (e.g. air, agricultural, water and soil samples); biological warfare agent samples; research samples (i.e. in the case of nucleic acids, the sample may be the products of an amplification reaction, including both target an signal amplification); purified samples, such as purified genomic DNA, RNA, proteins etc.; unpurified samples and samples containing (parts of) cells, bacteria, virusses, parasites or funghi.

As it is well known in the art, virtually any experimental manipulation may have been done on the sample. In general, the terms "biochip" or "Lab-on-a-Chip" or alike, refer to systems, comprising at least one micro-fluidic component or biosensor, that regulate, transport, mix and store minute quantities of fluids rapidly and reliably to carry out desired physical, chemical and biochemical reactions in larger numbers. These devices offer the possibility of human health assessment, genetic screening and pathogen detection. In addition, these devices have many other applications for manipulation and/or analysis of non-biological samples. Biochip devices are already being used to carry out a sequence of tasks, e.g. cell lyses, material extraction, washing, sample amplification, analysis etc. They are progressively used to carry out several preparation and analysis tasks in parallel, e.g. detection of several bacterial diseases. As such, micro-fluidic devices and biochips already contain a multiplicity of components, the number of which will only increase as the devices become more effective and more versatile.

Many of the components are electrical components used to sense or modify a property of the sample or fluid, such as heating elements, pumping elements, valves etc., and are frequently realized by direct fabrication of thin film electronics on the substrate of the device. Suitable properties that can be sensed or modified include, but are not limited to, temperature; flow rate or velocity; pressure, fluid, sample or analyte presence or absence, concentration, amount, mobility, or distribution; an optical characteristic; a magnetic characteristic; an electrical characteristic; electric field strength, disposition, or polarity.

One problem of this approach is that every electrical component on the device requires control terminals to independently control the component. Consequently, more space is required to connect the components to the control devices than to realize the devices themselves. Ultimately, the number of control terminals will become so large that it will become impractical to arrange all the terminals at the periphery of the device to make electrical contact. One possibility to realize the electrical contact is the use of an electrical contact foil.

In order to avoid a large number of control terminals, US patent 6,852,287 proposes embodiments of a method to control a number N of independently controllable components with smaller number of control terminals. In order to achieve this, both the use of multiplexing techniques or passive matrix techniques is proposed. In particular, the matrix technique is extremely attractive, as this allows for the maximum number of components to be controlled with the minimum number of control terminals. Conceptually, if one specific heater element is activated also a number of other heater elements will be activated unintentionally. As a result, heat will be generated where it is not required, and the heat generated at the intended heater element will be different than required as either some of the applied current has traveled through alternative paths, or the applied voltage is dropped along the rows and columns before reaching the heater element intended to be activated.

Flow sensors based on thermal operating principles have long been popular for their ease of use and fabrication. Sensors for use with biological applications, however, require low operating temperatures and biocompatibility. A thermal flow sensing array constructed of parylene and platinum has been disclosed in Meng, E. and Y.-C. Tai, "A parylene MEMS Flow Sensing Array", in Transducers 2003.2003: Boston, MA.

The disadvantage of the flow sensor of the prior art is that the flow sensor is a separate device. Integration of the known flow sensor with other fluid delivery devices and electronics on a biochip is difficult.

### SUMMARY OF THE INVENTION

It is an object of the invention to provide a micro-fluidic device having an improved performance compared to passive matrix based devices, and wherein the fluid flow can be detected.

This object is achieved by the micro-fluidic device according to the invention,

The micro-fluidic device according to the invention comprises a channel for transporting a fluid and a two-dimensional array of a plurality of components for processing a fluid and/or for sensing properties of the fluid. The components comprise at least one heater element. Each component is coupled to at least one control terminal enabling an active matrix to change the state of each component individually. The active matrix includes a two-dimensional array of electronic components realized in thin film technology. The fluid flow in the channel is determined by a sensor positioned at a distance of a further heater element downstream of the fluid flow.

The micro-fluidic device, e.g. a biochip, fabricated on a substrate is based upon active matrix principles. The device is preferably fabricated from one of the well known large area electronics technologies, such as a-Si, LTPS or organic transistor technologies. The active matrix makes it possible to independently control a larger number of components on the device with a smaller number of control terminals. The active matrix provides a high versatility of the device. The thin film technology ensures a very cost efficient manufacturing also of large devices. The fluid flow can be detected with a further heater element and a sensor positioned downstream of the further heater element. The fluid flow sensor may be based on thermal operating principles or may be based on changes in the impedance or capacitance. On a biochip the flow of liquid between the different modalities, (such as those required for PCR reactions, electrical lysing, cell sortation or electrical assisted hybridization) can be controlled by using Large Area Electronics.

All of these modalities can be coupled together on a LAE platform such as LTPS or amorphous Si. The fluid flow sensor can be processed at the same time with other electronic components in the LTPS or amourphous Si process, so that no additional costs are required to obtain the fluid flow sensor.

In a preferred embodiment, the device comprises at least two, even more preferred a multiplicity of heater elements. Such a device is referred to as a thermal processing array. These heater elements are suitable for heating fluid that may be present in cells or compartments of the microfluidic device.

The thermal processing array can be used to either maintain a constant temperature across the entire compartment area, or alternatively to create a defined time-dependent temperature profile if the reaction compartment is also configured in the form of an array and different portions of the reaction chamber require different temperatures.

In a most preferred embodiment, the thermal processing array comprises a multiplicity of individually addressable and drivable heating elements, and may preferably comprise additional elements such as temperature sensors and fluid-mixing or fluid-pumping elements or a combination thereof.

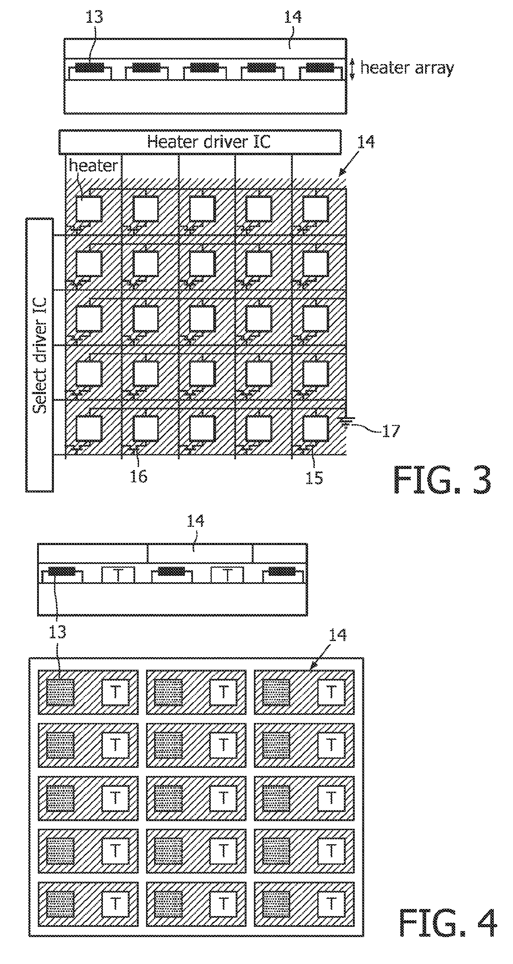

The inclusion of at least one temperature sensor is highly preferred. Even more preferred, the device comprises a multiplicity of temperature sensors to control a predefined temperature profile across an array of components or cells. This embodiment is illustrated in figure 4.

Preferably, the components for heating, and the other optional components, are all present on a biochemical processing module, which is preferably located in a biochip, lab-on-a-chip, micro fluidic device, or alike system.
The micro-fluidic device is preferably a disposable unit, which may be a replaceable part of a larger disposable or non-disposable unit (e.g. lab-on-a-chip, genechips, microfluidic device, or alike system). In addition to the components, the device may optionally comprise cells or cavities that can hold a fluid. Such cells are also referred to as array elements.

The biosensor may comprise one or more flow channels, whereby the sample may be introduced into the analysis chamber(s) and is subsequently removed after the analysis has been completed. In addition, the biosensor may comprise mechanical or electrical valves to contain the fluid in the biosensor or compartments of the biosensor for a certain period of time.

The further heater element is arranged to exchange heat with the fluid flowing through the channel when being driven with electrical energy.

In one advantageous embodiment of the invention the electronic components of the active matrix are formed by thin film transistors having gate, source and drain electrodes. In this case the active matrix includes a set of select lines and a set of control lines such that each individual component is controlled by one select line and one control line and the gate electrode of each thin film transistor is connected to a select line. In this advantageous embodiment the further heater element is coupled to one control terminal enabling the active matrix to change the state of the further heater element. The further heating element can be a resistive wire, which is carried by a substrate. The resistive wire may be a metal, such as aluminium, platinum, titanium, molybdenum or gold, or a transparent conductive oxide such as indium-tin oxide or another conductive material such as a conductive organic layer (e.g. doped conductive polymer).

The further heater element may be driven by a pulse, the pulse duration being in the range between 10 µs and 1 s. The further heater element(s) may be used to very slightly increase the temperature of the liquid. At a point later in the channel sensitive temperature sensors, based on either the thermal coefficient of a metal or some other thermally sensitive LAE component, can be used to sense the increase in temperature due to a pulse supplied to the heater element(s).

In a specific embodiment of the invention, the drive signal (voltage or current) applied to the heating element is modulated to obtain a pulsed heating of the fluid present in the fluidic well above the heating element.

The sensor may comprise at least one temperature sensing element for sensing the temperature of the fluid. The at least one temperature sensing element can be used to measure the temperature of the fluid.

The temperature sensor can be formed by a plurality of sensor elements for sensing the temperature of the fluid flow, the plurality of sensor elements being positioned downstream of the fluid flow at predefined distances from the further heater element.

The plurality of sensor elements can measure the thermal profile of the fluid passing by which is a measure for the velocity of the fluid, e.g. by measuring the height of the temperature profile, the timestamp of the peak position, the width of the temperature profile, or integrated area of the temperature pulse carried by the fluid. The temperature sensing element(s) may be read-out continuously or periodically.

Alternatively, a differential measurement can be applied where a further sensor is positioned upstream of the fluid flow at the same distance from the further heater element as the sensor. By subtracting the upstream signal from the down-stream signal any component associated with thermal diffusion is subtracted.

Rather than measuring the transport of a heat front in a microfluidic channel from the heater to a sensor it is also possible to measure the flow via the power consumption of the heater itself. In an advantageous embodiment the further heater element comprises the sensor, the sensor being arranged to detect the power consumption of the further heater element.

If the liquid is stagnant above the heater then the amount of power required to heat the liquid (immediately above the heater) is less than if the liquid is flowing. In fact the power required is directly proportional to the amount of liquid which has been transported over the heater and is therefore a measure for fluid flow.

The sensor can be placed immediately next to the heater and this signal can be to feedback to the power supply for the heater. It is actually preferable to use the heater itself for this. In this embodiment the further heater element comprises the sensor, the sensor being arranged to detect the power consumption of the further heater element.

In this case then a current of say x mA is supplied to the heater and the voltage required to supply this current is measured. From these parameters the resistance of the heater is known and thus the temperature. The power required to maintain this temperature is a measure for the flow.

In the micro-fluidic device, the sensor can be formed by a plurality of sensor elements for sensing the resistance or capacitance of the passing fluid.

In the micro-fluidic device a gas bubble can be present. A gas bubble may be intentionally introduced in a microfluidic channel which is used to transport the fluid between e.g. the different modalities or in the flow channels. This gas bubble can be intentionally trapped in the channel when filling or created via electrodes designed for gas evolution via electrolysis. Further along the channel probe electrodes are incorporated. These electrodes are used to measure either the resistance or capacitance of the passing liquid. When the gas bubble passes a first probe electrode the moment is registered. Similarly this is also done when passing a second probe electrode. By simply subtracting the times the time difference and thus the fluid flow can be calculated. An LTPS circuit has been designed which measures the impedance between electrodes and can register these times. A simple time subtraction has been made in the LTPS circuitry

It should be noted that in any of the embodiments of the micro-fluidic device described above the further heater element can be one and the same as the at least one heater element (identical).

The invention further relates to a method of determining the fluid flow in the micro-fluidic device according to the invention as described above.

### BRIEF DESCRIPTION OF THE DRAWINGS

The invention will be better understood and other particular features and advantages will become apparent on reading the following description appended with drawings. In the drawings:
Fig. 1 a schematic block diagram of a micro-fluidic device according to the invention illustrating the active matrix concept; At least one of the components (2) is a heater element.
Fig. 2 a first embodiment of the micro-fluidic device, the active matrix of which is based on thin film transistors; At least one of the components (2) is a heater element.
Fig. 3 shows a device wherein it is possible to sequentially activate heaters in different lines.
Fig. 4 shows a microfluidic device comprising a multiplicity of temperature sensors.
Fig. 5 shows a first embodiment of the fluid flow sensor, a) at t=0 sec., heater on and b) at t= x sec. a heat profile is measured downstream.
Fig. 6 shows a second embodiment of the fluid flow sensor, a) pulsed driving of heater and b) measured signal at sensor.
Fig. 7 shows a third embodiment of the fluid flow sensor, a) at t=0 sec., heater on and b) at t= xsec heat is measured down-stream.
Fig. 8 shows a fourth alternative embodiment of the fluid flow sensor based on impedance or capacitive sensing. In (a-d) is shown the creation of a gas bubble via electrolysis and the measurement of the passing gas bubble.

### DESCRIPTION OF PREFERRED EMBODIMENTS

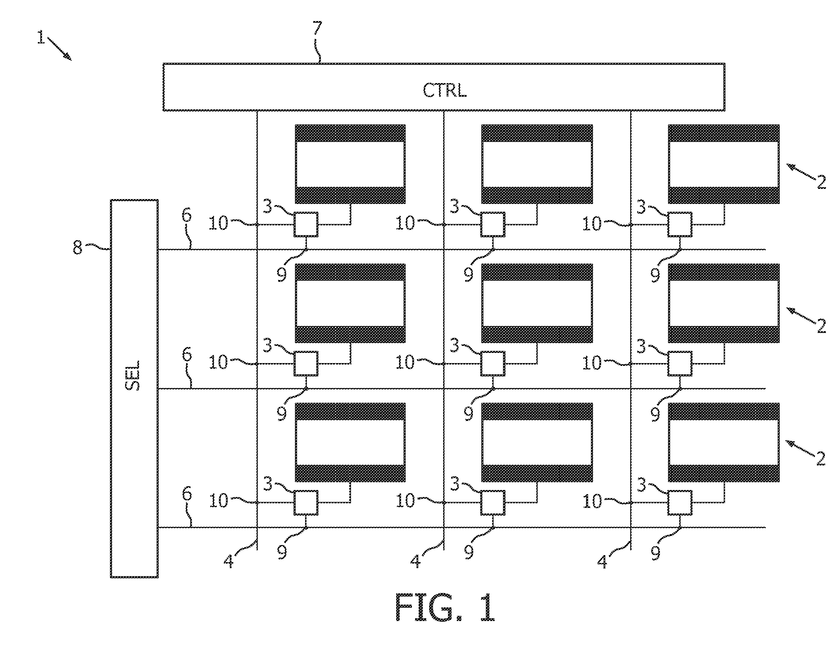

Fig. 1 illustrates the general concept of a micro-fluidic device based on an active matrix. The micro-fluidic device as a whole is designated with the reference number 1. The device comprises a two-dimensional array of components 2. Each component 2 is associated with a switching means 3 arranged to selectively activate the component 2. Each switching means is connected to a control line 4 and a select line 6. The control lines 4 are connected to a common control driver 7. The select lines 6 are connected to a common select driver 8. The control lines 4 in conjunction with the select lines 6 form a two-dimensional array of control terminals 9, 10.

In this way an active matrix is realized to ensure that all components can be driven independently. The component 2 may be any electronic device e.g. a heater element, a pumping element, a valve, a sensing component etc. being driven by either a voltage or a current signal. It is to be understood that the examples for the components 2 are not to be construed in a limiting sense. Activating a component 2 means changing its state e.g. by turning it from on to off, or vice versa or by changing its setting. It is also noted that the individual switching means 3 may comprise a plurality of sub components comprising both active and/or passive electronic components. However, there is no requirement that all sub components are activated together.

The operation of the micro-fluidic device 1 illustrated in Fig. 1 to independently control a single component 2 is as follows:
- In the non-addressing state, all select lines 6 are set to a voltage where the switching elements 3 are non-conducting. In this case, no component 2 is activated.
- In order to activate a preselected component 2 the select driver 8 applies a select signal to the select line 6 to which the preselected component 2 is coupled. As a consequence all switching means 3 connected to the same select line 6 are switched into a conducting state.
- A control signal generated by the control driver 7, e.g. a voltage or a current is applied to the control line where the preselected component 2 is situated. The control signal is set to its desired level and is passed through the switching means 3 to the component 2, causing the component to be activated.
- The control signals in all other control lines 4 are held at a level, which will not change the state of the remaining components connected to the same select line 6 as the preselected component 2. In this example, they will remain un-activated.
- All other select lines 6 will be held in the non-select state, so that the other components 2 connected to the same control line 4 as the preselected component will not be activated because their associated switching means 3 remain in a non-conducting state.
- After the preselected component is set into the desired state, the respective select line 6 is unselected, returning all switching means 3 into a non-conducting state, preventing any further change in the state of the preselected component.

The device will then remain in the non-addressed state until the following control signal requires to change the state of any one of the components 2, at which point the above sequence of operation is repeated.

The two-dimensional array formed by the control lines 4 and the select lines 6 can also be described in terms of rows and columns, where the select lines 6 define the rows and the control lines 4 the columns.

It is also possible to control more than one component 2 in a given row simultaneously by applying a control signal to more than one column in the array during the select period. It is possible to sequentially control components in different rows by activating another row by using the select driver and applying a control signal to one or more columns in the array.

It is also possible to address the micro-fluidic device 1 such that a component 2 is only activated while the control signal is present. However, in a preferred embodiment, it is advantageous to incorporate a memory device into the component whereby the control signal is remembered after the select period is completed. For the memory device a capacitor or a transistor based memory element is suitable. This makes it possible to have a multiplicity of components at any point across the array activated simultaneously. This option is not available in the passive system known in the prior art. Of course, if a memory device is available, a second control signal will explicitly be required to de-activate the component.

Preferably the device comprises cells and channels, most preferred microfluidic channels, that connect one cell to at least one, or more preferred a plurality of, other cells. Optionally a valve is located between the cells. This enables the performance of a reaction with various steps in the device. In such an embodiment, fluids may be moved sequentially from one cell to another or alternatively many cells may be processed in parallel.

In particular, the invention enables accurate, reproducible, reliable and fast thermal cycling during DNA amplification on a biochip, for instance using (multiplexed) PCR or (multiplexed) real-time quantitative PCR (RQ-PCR), such that the temperature of the array elements may be individually and in parallel controlled, without significant additional costs or issues concerning the number of input and output pins. Moreover, with respect to the situation in which the heating elements are located in the bench-top machine, this invention offers a more optimal and more reliable thermal contact between temperature components and fluid.

Therefore in a further aspect the invention relates to use of the device according to the invention in a process wherein temperature is controlled.

In another aspect the invention relates to use of the device according to the invention in a process wherein the temperature is changed according to a pre-defined regime.

Last but not least, this invention allows an advantageous way of performing RQ-PCR on a biochip by combining a cost-effective high performance thermal processing array (e.g. high resolution, individual and parallel temperature control of compartments, high reproducibility, high reliability and high accuracy) on the disposable, with the high performance (e.g. high resolution, high signal-to-noise ratio) of an optical detection setup (e.g. light source, CCD camera, filters) generally used in a bench-top machine for detection of fluorescent signals in molecular diagnostics.

Hence in a further aspect the invention relates to a method of performing the PCR process, preferably RQ-PCR process wherein use is made of the micro-fluidic device as described above.

In another aspect the invention relates to the microfluidic device as described above, in combination with an optical detection set up.

In a further aspect the invention relates to a method of detecting a product using a diagnostic device comprising a micro-fluidic device according to the invention, wherein the detection is based on optical methods.

After having illustrated the general concept and the advantages of a micro-fluidic device 1 in the following description specific embodiments will be explained.

The first embodiment describes an active matrix micro-fluid device based on thin film transistors

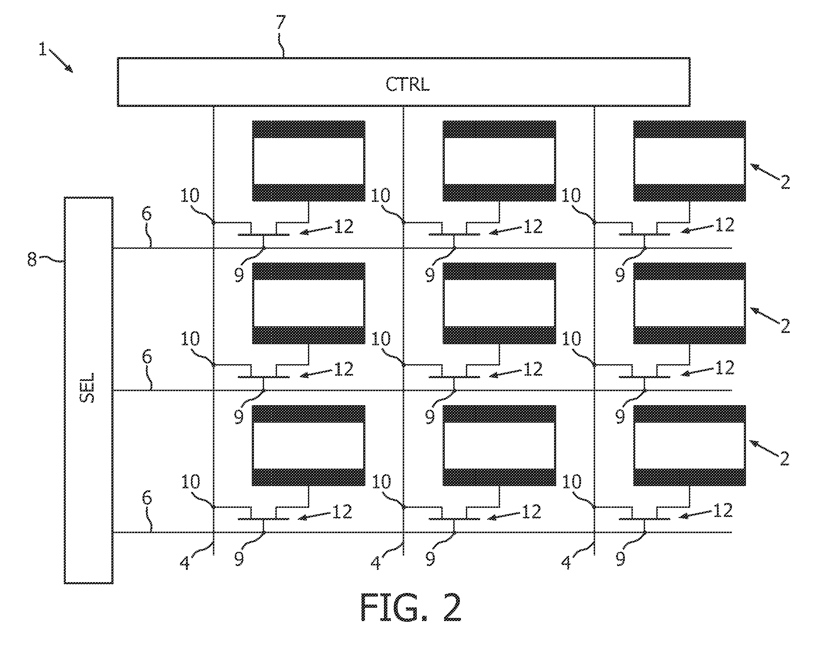

Fig. 2 exhibits an active matrix micro-fluidic device 1 using thin film transistors (TFT) 12 as switching means 3 to ensure that all components, for example the heating elements, can independently be activated. Each component 2 is connected to the matrix of control terminals via a TFT switch 12. At least one of the components is a heater element. TFTs are well known switching elements in thin film large area electronics, and have found extensive use e.g. in flat panel display applications. Industrially, the major manufacturing methods for TFTs are based upon either amorphous-silicon (a-Si) or low temperature polycrystalline silicon (LTPS) technologies. But other technologies such as organic semiconductors or other non-Si based semiconductor technologies, such as CdSe, can be used. The operation of the device illustrated in Fig. 2 to independently control a single component 2 is as follows:
- In the non-addressing state, all select lines 6 are set to a voltage where the TFTs are non-conducting. In the case of a-Si, we have typically an n-type TFT and hence a negative voltage has to be applied to the gate of the TFTs. In this case, no component 2 is activated.
- In order to activate a preselected component 2 the select driver 8 applies a positive select signal to the select line 6 to which the preselected component 2 is connected. Thus, all TFTs 12 connected to this select line are switched into their conducting state.
- A control signal generated by the control driver 7, a voltage or current signal is applied to the column where the preselected component is located. The TFT 12 passes the control signal to the preselected component, which is coupled to the drain of the TFT, for activating the component.
- The control signals in all other columns are held at a level that will not change the state of remaining components of the row. In this example, they will remain un-activated.
- The select signals of all other rows will be held in the non-select state by applying a negative voltage signal to the gate of the TFTs, so that the other components are connected to the same column via non-conducting TFTs and will not be activated.
- After the component is set into the desired state, the TFTs 12 in the row are again set to the non-conducting state, preventing any further change in the state of the component.

The device will then remain in the non-addressed state until the following control signal requires to change the state of any one of the components, at which point the above sequence of operation is repeated.

With a TFT based switch, it is again possible to control more than one component in a given row simultaneously by applying a control signal to more than one column in the array during the select period. It is possible to sequentially control components in different rows by activating another row by using the select driver and by applying a control signal to one or more columns in the array. Furthermore, it is still possible to address the system such that the component is only activated while the control signal is present, or alternatively to incorporate a memory device into the component (e.g. a capacitor element, or a transistor based memory element) whereby the control signal is remembered after the select period is completed.

In another embodiment, the heater elements are provided as a regular array of identical units, whereby the heaters are connected to the driver via the switches (e.g. transistors) of the active matrix. The gates of the transistors are connected to a select driver (for example a standard shift register gate driver as used for an AMLCD), whilst the source is connected to the heater driver, for example a set of voltage or current drivers. Operation is as follows:
- To activate a given heater element, the transistors in the line incorporating the required heater are switched into the conducting state (by e.g. applying a positive voltage to the gates from the select driver).
- The signal (voltage or current) in the column where the heater is situated is set to its desired value. This signal is passed through the conducting TFT to the heater element, resulting in a local temperature increase.
- The driving signal in all other columns is held at a voltage or current, which will not cause heating (this will typically be 0V or 0A).
- After the temperature increase has been realized, the transistors in the line are again set to the non-conducting state, preventing further heater activation.

It is also possible to activate more than one heater in a given line simultaneously by applying a signal to more than one column in the array. It is possible to sequentially activate heaters in different lines by activating another line (using the gate driver) and applying a signal to one or more columns in the array. This embodiment is illustrated in figure 3. In a first embodiment the biochemical processing module comprises a discrete array of heating elements (13) based on active matrix principles, such that a reaction compartment (14) contains a plurality of heaters. In figure 3 the following is shown:
- heating element (13)
- reaction compartment (14)
- transistor switch (16)
- heater electrode (15)
- common electrode (17)

There are several options for configuring the biochemical processing module depending upon the required heat processing.

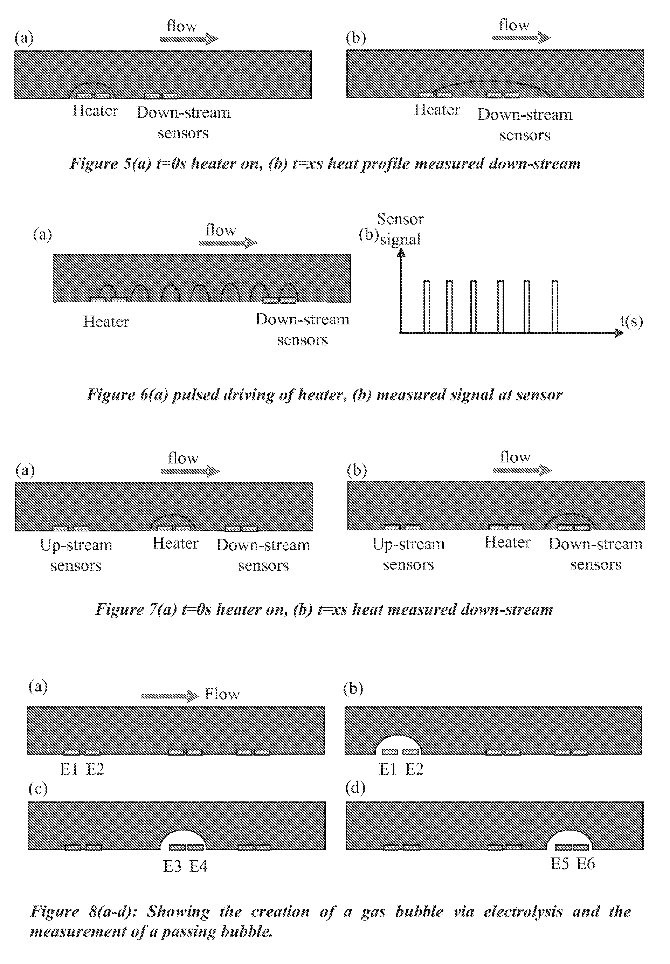

Whilst in this embodiment of figure 3 a driver is considered which is capable of providing (if required) signals to all columns of the array simultaneously, it is also feasible to consider a more simple driver with a function of a de-multiplexer. In this example (figure 5a) only a single output driver is required to generate the heating signals (e.g. a voltage or a current). The function of the de-multiplex circuit is simply to route the heater signal to one of the columns, whereby only the heater is activated in the selected line in that column. It should be understood that a plurality of drivers with a function of a de-multiplexer may be used to drive the entire heater array.

In another embodiment according to the invention, an integrated heater driver is included per heating elements based on active matrix technology.

In yet another embodiment, the device comprises a local driver provided with a memory function. This allows the heating signal to be applied for a longer period of time, enabling better and more accurate control of a given temperature profile.

The inclusion of at least one temperature sensor is highly preferred. Even more preferred, the device comprises a multiplicity of temperature sensors to control a predefined temperature profile across an array of components or cells. This embodiment is illustrated in figure 4.

In this embodiment (figure 4), the biochemical processing module comprises a compartment (14) or a plurality (e.g. array) of compartments (14) and a discrete array of heating elements (13) and the at least one temperature sensor (T). Each heating element is individually drivable, whereby a multiplicity of temperature profiles may be created. The temperature profile can advantageously be measured by a plurality of temperature sensors.

In embodiments, the temperature sensors may be used to prevent a temperature from extending beyond a given range, and may preferably be used to define and control the desired temperature profile.

The biosensor may comprise one or more flow channels, whereby the sample may be introduced into the analysis chamber(s) and is subsequently removed after the analysis has been completed. In addition, the biosensor may comprise mechanical or electrical valves to contain the fluid in the biosensor or compartments of the biosensor for a certain period of time.

On a biochip the flow of liquid between the different modalities, (such as those required for PCR reactions, electrical lysing, cell sortation or electrical assisted hybridization) can be controlled by using Large Area Electronics.

All of these modalities can be coupled together on a LAE platform such as LTPS or amorphous Si.

In the embodiments of Figs. 5-8 the heater element(s) may be used to very slightly increase the temperature of the liquid. At a point later in the channel sensitive temperature sensors, based on either the thermal coefficient of a metal or some other thermally sensitive LAE component, can be used to sense the increase in temperature due to a pulse supplied to the heater element(s).

In the embodiment of Fig. 5 the signal of the sensor itself can be considered to determine the velocity of the liquid. If the pulse has a narrow Gaussian distribution at the heater then this will spread out as time passes. The FWHM of the heat distribution as measured at the sensors will be related to the time taken for the heated liquid to move to the sensors.

The micro-fluidic device in this embodiment of Fig. 5 comprises at least one thermal-based flow sensing element that can be addressed using active matrix addressing.

The thermal-based flow sensing element comprises at least one heating element and at least one temperature sensing element. In a preferred embodiment, the heating element is a resistive wire, which is carried by a substrate. The resistive wire may be a metal, such as aluminium, platinum, titanium, molybdenum or gold, or a transparent conductive oxide such as indium-tin oxide or another conductive material such as a conductive organic layer (e.g. doped conductive polymer). The resistive wire may be manufactured using photolithographic techniques to pattern a sputtered or evaporated conductive thin film. In a preferred embodiment of the invention, the patterned resistive wire is covered by an electrically insulating layer, which is situated in between the resistive wire and the fluid. The electrically insulating layer may consist of a single material, such as an inorganic dielectric (e.g. SiO₂, SiN), an organic insulator (e.g. fluor containing polymers) or a photoresist (e.g. su8) or a stack of material layers. The material layers may be deposited and patterned using standard thin film deposition techniques.

In a specific embodiment of the invention, the drive signal (voltage or current) applied to the heating element is modulated to obtain a pulsed heating of the fluid present in the fluidic well above the heating element. The at least a temperature sensing element is used to measure the temperature of the fluid. The nearby located thermal sensor measures the thermal profile of the fluid passing by which is a measure for the velocity of the fluid, e.g. by measuring the height of the temperature profile, the timestamp of the peak position, the width of the temperature profile, or integrated area of the temperature pulse carried by the fluid. The temperature sensing element may be read-out continuously or periodically.

In a specific embodiment the temperature sensing element comprises a resistive wire. The resistive wire may be a metal, such as aluminium, platinum, titanium, molybdenum or gold, or a transparent conductive oxide such as indium-tin oxide or another conductive material such as a conductive organic layer (e.g. doped conductive polymer). The resistive wire may be manufactured using photolithographic techniques to pattern a sputtered or evaporated conductive thin film. In a preferred embodiment of the invention, the patterned resistive wire is covered by an electrically insulating layer, which is situated in between the resistive wire and the fluid. The electrically insulating layer may consist of a single material, such as an inorganic dielectric (e.g. SiO₂, SiN), an organic insulator (e.g. fluor containing polymers) or a photoresist (e.g. su8) or a stack of material layers. The material layers may be deposited and patterned using standard thin film deposition techniques.

In a particular embodiment of the invention, the heating element consists of patterned strips of a bi-layer (200 nm thick) of chromium (Cr) and aluminium (Al) on a glass substrate covered by a 3 micron patterned su8 insulating layer. The typical sheet resistivity of such CrAl layers is 0.4 Ohms/square. The resistance of such strips can be typically varied between 0.1 and 100 Ohm using various width to length ratios. Using pulsed current signals, typically in the range of 1 to 500 mA and typical durations of 1 to 1000 ms, the fluid in the fluidic well above the heating element can be heated with high heating rates during short periods. For instance, a 25 ms pulse may cause up to a 10 °C increase in temperature. Typically pulses that increase the temperature 0.1 to 10 °C are used, preferably, 0.5 to 5 °C, even more preferable, 1 to 3 °C.

In a preferred embodiment, a heating element can also be operated as a temperature sensing element. In that case, such a heating element may be a resistive wire that dissipates heat upon application of a voltage or current signal. By monitoring the resistance of the wire, the temperature of the heating element may be determined using the physical dependence of resistance upon temperature.

In another embodiment of the invention, a plurality of temperature sensors is used to measure the parameters of the temperature profile carried by the flowing fluid.

In the embodiment of Fig. 6 a repetitive signal may be given to the heater. The frequency of the pulsed signal can be sought in the output of the sensors, Fig. 6(a). This is effectively a lock-in measurement (with the detected signal shown schematically in Fig. 6(b). The current through the heater is oscillated with given a frequency (fo) between 10-100 Hz. The output of a sensor (i.e. the resistance of a metal wire or a temperature sensitive TFT etc) is measured and the signal is Fourier transformed. The signal component at the frequency fo (that which was used to oscillate the heater) is noted as the signal of interest.

This may be beneficial for the application of a bio-sensor as it will allow the measurement at very low temperature increases and may prevent denaturing of proteins in the sample.

In the embodiment of Fig. 7 a pulse may be given to the thin film heater and at the sensors the time difference before the heat pulse arrives at the sensors can be measured.

A differential measurement can be performed where sensors are placed at the same distance up-stream from the heaters. By subtracting the upstream signal from the down-stream signal any component associated with thermal diffusion is subtracted. This is illustrated in Fig. 7(a-b).

Rather than measuring the transport of a heat front in a microfluidic channel from the heater to a sensor it is also possible to measure the flow via the power consumption of the heater itself. If the liquid is stagnant above the heater then the amount of power required to heat the liquid (immediately above the heater) is less than if the liquid is flowing. In fact the power required is directly proportional to the amount of liquid which has been transported over the heater and is therefore a measure for fluid flow.

The sensor can be placed immediately next to the heater and this signal can be feedback to the power supply for the heater. It is actually preferable to use the heater itself for this. In this case then a current of for example x mA is supplied to the heater and the voltage required to supply this current is measured. From these parameters the resistance of the heater is known and thus the temperature. The power required to maintain this temperature is a measure for the flow.

In the embodiment of Fig. 8 a gas bubble is intentionally introduced in a microfluidic channel which is used to transport the fluid between the different modalities. This gas bubble can be intentionally trapped in the channel when filling or created via electrodes designed for gas evolution via electrolysis. This is illustrated in Fig. 8(a-d). Initially there is no gas, Fig.8(a). When the flow has to be probed then a voltage is applied between electrodes E1 and E2, figure 8(b), and this in turn creates a gas bubble. Further along the channel probe electrodes are incorporated, E3-E6. These electrodes are used to measure either the resistance or capacitance of the passing liquid. When the gas bubble passes E3-E4 the moment is registered. Similarly this is also done when passing E5-E6. By simply subtracting the times the time difference and thus the fluid flow can be calculated. An LTPS circuit has been designed which measures the impedance between electrodes and can register these times. A simple time subtraction has been made in the LTPS circuitry.

In another embodiment the device comprises a compartment or plurality (e.g. array) of compartments (cells) and a discrete array of heating elements and at least one mixing or pumping element. Each heating element is individually drivable, whereby a multiplicity of temperature profiles may be created. A uniform temperature profile can advantageously be created by a plurality of mixing or pumping elements.

In a preferred embodiment, the mixing or pumping elements are integrated into the heating element array, for example if this component were to be manufactured using large area thin film electronics technologies, such as low temperature Poly-Si.

To make the device especially suitable for a PCR process, it is advantageous to include a cooling element. In an embodiment, cooling is provided by a (bench-top) machine handling a PCR module, for instance by bringing the PCR module in thermal contact with a cooled mass, peltier element, etc., or by use of convection (e.g. fan). In another embodiment, a cooling element is incorporated in the PCR module, such as a thin-film peltier element, or an array of cooling elements is incorporated.

## Claims

1. Micro-fluidic device (1) comprising a channel for transporting a fluid (21), a two-dimensional array of a plurality of components (2) for processing the fluid and/or for sensing properties of the fluid, wherein the components comprise at least one heater element (13), and wherein each component (2) is coupled to at least one control terminal (9, 10) enabling an active matrix to change the state of each component individually, the active matrix including a two-dimensional array of electronic components realized in thin film technology, wherein the fluid flows in the channel and a sensor (22) is positioned at a distance (23) of a further heater element (24) downstream of the fluid flow.

2. Micro-fluidic device as claimed in Claim 1, wherein the further heater element is coupled to the at least one control terminal (9, 10) enabling the active matrix to change the state of the further heater element.

3. Micro-fluidic device (1) as claimed in Claims 1-2, wherein the further heater element is arranged to exchange heat with the fluid flowing through the channel when being driven with electrical energy.

4. Micro-fluidic device (1) as claimed in Claim 3, wherein the further heater element is driven by a pulse, the pulse duration being in the range between 10 µs and 1 s.

5. Micro-fluidic device (1) as claimed in Claims 1-4, wherein the sensor comprises at least one temperature sensing element for sensing the temperature of the fluid.

6. Micro-fluidic device (1) as claimed in Claims 1-5, wherein the sensor is formed by a plurality of sensor elements (SE) for sensing the temperature of the fluid flow, the plurality of sensor elements being positioned downstream of the fluid flow at predefined distances from the further heater element.

7. Micro-fluidic device (1) as claimed in Claims 1-6, wherein a further sensor is positioned upstream of the fluid flow at the same distance from the further heater element as the sensor.

8. Micro-fluidic device (1) as claimed in Claims 1, wherein the further heater element comprises the sensor, the sensor being arranged to detect the power consumption of the further heater element.

9. Micro-fluidic device (1) as claimed in Claims 7, wherein a current is supplied to the further heater element and the sensor measures the voltage required to supply the current.

10. Micro-fluidic device (1) as claimed in Claims 1-3, wherein the sensor is formed by a plurality of sensor elements (SE) for sensing the resistance or capacitance of the passing fluid.

11. Micro-fluidic device (1) as claimed in Claim 10, wherein a gas bubble is present.

12. Micro-fluidic device as claimed in any of the preceding claims, wherein the further heater element (24) is one and the same as the at least one heater element (13).

13. Method of determining the fluid flow in the micro-fluidic device as claimed in Claims 1-6 or 12, wherein a current through the further heater element is oscillated with given a frequency (fo), an output signal of the sensor is measured, the output signal is Fourier transformed, and the output signal component at the frequency (fo) is used to calculate the fluid flow.

14. Method of determining the fluid flow in the micro-fluidic device as claimed in Claim 7 or 12, wherein the output signal of the further sensor is subtracted from the output signal of the sensor.

15. Method of determining the fluid flow in the micro-fluidic device as claimed in Claims 8-9 or 12, wherein the power consumption of the heater element is directly proportional to the amount of fluid which has been transported over the further heater element in the channel, from which power consumption the fluid flow is calculated.

16. Method of determining the fluid flow in the micro-fluidic device as claimed in Claim 11, wherein the resistance or capacitance is measured of the passing fluid and the resistance or capacitance of the passing fluid without and with the gas bubble is detected by the plurality of sensor elements.
